(19) Europäisches Patentamt
European Patent Office
Office européen des brevets

(11) **EP 4 741 150 A1**

(12) **EUROPEAN PATENT APPLICATION**

(43) Date of publication:
**13.05.2026 Bulletin 2026/20**

(21) Application number: **25213722.9**

(22) Date of filing: **05.11.2025**

(51) International Patent Classification (IPC):
**B32B 1/08** *(2006.01)* **B32B 27/30** *(2006.01)*
**B32B 27/32** *(2006.01)* **B32B 27/08** *(2006.01)*
**H01B 3/44** *(2006.01)*

(52) Cooperative Patent Classification (CPC):
**B32B 27/304; B32B 1/08; B32B 27/322;**
B32B 27/08; B32B 2307/736; B32B 2597/00;
H01B 3/445

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **11.11.2024 JP 2024196654**

(71) Applicants:
• **Sumitomo Electric Fine Polymer, Inc.**
**Sennan-gun, Osaka 590-0458 (JP)**
• **Sumitomo Electric Industries, Ltd.**
**Osaka-shi, Osaka 541-0041 (JP)**

(72) Inventors:
• **KUDO, Mayumi**
**Sennan-gun, 590-0458 (JP)**
• **ISHIBASHI, Keiji**
**Sennan-gun, 590-0458 (JP)**
• **FUKUMOTO, Ryota**
**Osaka-shi, 541-0041 (JP)**
• **EMOTO, Yasutaka**
**Sennan-gun, 590-0458 (JP)**

(74) Representative: **Boult Wade Tennant LLP**
**Salisbury Square House**
**8 Salisbury Square**
**London EC4Y 8AP (GB)**

(54) **HEAT-SHRINKABLE TUBE, HEAT-SHRINKABLE TUBE MEMBER, WIRE SPLICE, AND WIRE HARNESS**

(57) A heat-shrinkable tube includes an outer layer having a cylindrical shape, and an inner layer disposed on an inner peripheral surface of the outer layer. The outer layer contains a first fluororesin, the inner layer contains a second fluororesin as a main component, the inner layer has a shear viscosity of 300 Pa·s to 10,000 Pa·s at 215°C and a shear rate of 10/s, and the inner layer has a shear viscosity of 3,000 Pa·s to 70,000 Pa·s at 200°C and a shear rate of 1/s.

FIG.1

EP 4 741 150 A1

**Description**

CROSS REFERENCE TO RELATED APPLICATIONS

This application claims priority based on Japanese Patent Application No. 2024-196654 filed on November 11, 2024, and the entire contents of the Japanese patent application are incorporated herein by reference.

TECHNICAL FIELD

The present disclosure relates to a heat-shrinkable tube, a heat-shrinkable tube member, a wire splice, and a wire harness.

BACKGROUND

The heat-shrinkable tube, when heated with the heat-shrinkable tube covering connection portions between insulated wires and the like, shrinks along the shape of the covered portion and conforms tightly to that portion. The heat-shrinkable tube is used for protection, insulation, waterproofing, oil proofing, corrosion protection, and the like of a connection portion between insulated wires.

As a heat-shrinkable tube, a two layer heat-shrinkable tube in which an adhesive layer (inner layer) is provided on an inner peripheral surface of a heat-shrinkable outer layer in order to improve adhesion to a connection portion of insulated wires is known (for example, Patent Literature 1: WO 2019/097820 and Patent Literature 2: WO 2021/243036).

SUMMARY

For applications requiring high heat resistance, such as in automotive and aerospace uses, insulated wires coated with high heat-resistant resins are utilized, such as ETFE wires coated with a copolymer of tetrafluoroethylene and ethylene (ETFE). A heat-shrinkable tube used for protection of a connection portion between insulated wires having such high heat resistance, waterproofing, oil proofing, and the like is required to maintain excellent sealing properties under a high-temperature environment. In the present disclosure, the high temperature means 150°C to 200°C which is the use temperature of a high heat-resistant insulated wire such as an ethylene-tetrafluoroethylene copolymer (ETFE) wire to be covered.

Further, there is also a demand for improvement in sealing properties of the heat-shrinkable tube during heat shrinkage. In the present disclosure, the temperature of the heat-shrinkable tube during heat shrinkage is 150°C to 215°C.

Thus, an object of the present disclosure is to provide a heat-shrinkable tube and a heat-shrinkable tube member that have excellent sealing properties when the heat-shrinkable tube is heated and shrunk and can maintain excellent sealing properties even in use under the high-temperature environment, and a wire splice and a wire harness that include a shrunk product of the heat-shrinkable tube or a shrunk product of the heat-shrinkable tube member.

First, embodiments of the present disclosure will be listed and described.

(1) A heat-shrinkable tube of the present disclosure includes an outer layer having a cylindrical shape, and an inner layer disposed on an inner peripheral surface of the outer layer. The outer layer contains a first fluororesin. The inner layer contains a second fluororesin as a main component. The inner layer has a shear viscosity of 300 Pa·s to 10,000 Pa·s at 215°C and a shear rate of 10/s. The inner layer has a shear viscosity of 3,000 Pa·s to 70,000 Pa·s at 200°C and a shear rate of 1/s.

The heat-shrinkable tube of the present disclosure has excellent sealing properties during heat shrinkage, and can maintain excellent sealing properties even when used in the high-temperature environment. The reason for this is inferred to be as follows.

The outer layer of the heat-shrinkable tube of the present disclosure includes a first fluororesin. Fluororesin has a melting point of 100°C or higher and has a strong fluorine bond, and thus has high heat resistance. Thus, the outer layer can contribute to maintaining excellent sealing properties of the heat-shrinkable tube in use under the high-temperature environment of about 200°C. Further, since the fluororesin has high chemical resistance, the outer layer can contribute to blocking the penetration of acid, alkali, and oil.

The inner layer of the heat-shrinkable tube of the present disclosure includes a second fluororesin as a main component. Fluororesin has a melting point of 100°C or higher and has a strong fluorine bond, and thus has high heat resistance. Thus, the inner layer can contribute to maintaining excellent sealing properties of the heat-shrinkable tube in use under the high-temperature environment of about 200°C. Further, since the fluororesin has high chemical resistance, the inner layer can contribute to blocking the penetration of acid, alkali, and oil.

The shear viscosity of the inner layer of the heat-shrinkable tube of the present disclosure at 215°C and a shear rate of 10/s is 300 Pa·s to 10,000 Pa·s. According to this, when the heat-shrinkable tube is heated and shrunk, the fluidity of the inner layer is appropriate, a gap is hardly generated between the covering target and the heat-shrinkable tube, and can obtain good sealing properties. Since the fluidity of the inner layer of the heat-shrinkable tube during heat shrinkage corresponds to rapid shear, in the heat-shrinkable tube of the present disclosure, the shear viscosity of the inner layer at 215°C and a shear rate of 10/s has been defined.

When the shear viscosity of the inner layer at 215°C and a shear rate of 10/s is less than 300 Pa·s, the fluidity of the inner layer of the heat-shrinkable tube during heat shrinkage is too high, and the inner layer is eluted from the end of the heat-shrinkable tube, resulting in a decrease in sealing properties. When the shear viscosity of the inner layer at 215°C and a shear rate of 10/s is more than 10,000 Pa·s, the fluidity of the inner layer of the heat-shrinkable tube during heat shrinkage is too low, and the connection portion between the insulated wires cannot be sufficiently sealed.

The shear viscosity of the inner layer of the heat-shrinkable tube of the present disclosure at 200°C and a shear rate of 1/s is 3,000 Pa·s to 70,000 Pa·s. According to this, the inner layer has appropriate fluidity and can obtain good sealing properties in the high-temperature environment. Since the flow of the inner layer under the high-temperature environment corresponds to slow shear, in the heat-shrinkable tube of the present disclosure, the shear viscosity of the inner layer at 200°C and a shear rate of 1/s has been defined.

When the shear viscosity of the inner layer at 200°C and a shear rate of 1/s is less than 3,000 Pa·s, the inner layer is likely to flow under the high-temperature environment, and high sealing properties cannot be maintained. When the shear viscosity of the inner layer at 200°C and a shear rate of 1/s is more than 70,000 Pa·s, the fluidity of the inner layer is too low under the high-temperature environment, and high sealing properties cannot be maintained.

(2) In the above (1), the outer layer may contain, as a main component, a mixture consisting of the first fluororesin and a fluoro-rubber, and the outer layer has a storage modulus of 0.5 MPa to 5.0 MPa at 215°C. According to this, the sealing properties of the heat-shrinkable tube during heat shrinkage and its sealing properties under the high-temperature environment are further improved. The reason for this is inferred to be as follows.

Fluoro-rubber has a strong fluorine bond, is less likely to cause a decrease in characteristics due to oxidative deterioration, and has high heat resistance. Thus, the outer layer containing the fluoro-rubber can contribute to maintaining excellent sealing properties of the heat-shrinkable tube in use under the high-temperature environment of about 200°C.

The storage modulus of the outer layer of the heat-shrinkable tube of the present disclosure at 215°C is 0.5 MPa to 5.0 MPa. According to this, the heat-shrinkable tube can exhibit good shrinkage characteristics during heat shrinkage and have excellent sealing properties. Further, the heat-shrinkable tube can have excellent shape memory properties.

When the storage modulus of the outer layer at 215°C is 0.5 MPa or more, the shrinkage characteristics of the heat-shrinkable tube are further improved, and the sealing properties during heat shrinkage are further improved. Further, the shape memory property of the heat-shrinkable tube is easily exhibited, and the heat resistance is also improved. When the storage modulus of the outer layer at 215°C is 5.0 MPa or less, the strength of the shrinkage force is appropriately adjusted, and the inner layer is easily held at a necessary place.

The mixture, which is the main component of the outer layer, includes the fluoro-rubber together with the first fluororesin. By combining the fluoro-rubber having high heat resistance with the fluororesin having a relatively low melting point, the outer layer can shrink at a low temperature while maintaining the heat resistance. Thus, the temperature of the heat-shrinkable tube during heat shrinkage can be lowered, and deterioration of the object (for example, an ETFE wire) to be covered can be reduced.

(3) In the above (2), the fluoro-rubber may be a VDF-HFP-TFE copolymer. According to this, the adhesion between the outer layer and the inner layer improves, and the sealing properties of the heat-shrinkable tube further improve. It is noted that VDF stands for vinylidene fluoride, HFP stands for hexafluoropropylene and TFE stands for tetrafluoroethylene.

(4) In any one of the above (1) to (3), in a DSC curve of the inner layer, one or more melting peaks may be present in a range of 120°C to 195°C. The DSC curve may be obtained by performing a measurement using a differential scanning calorimeter in a range of -50°C to 300°C at a heating rate (rate of temperature increase) of 10°C/min. When one or more melting peaks are present at 120°C or higher, the heat resistance of the inner layer is further improved, and the sealing performance is improved. When one or more melting peaks are present at 195°C or lower, the fluidity of the inner layer is further improved, and the sealing performance is improved.

(5) In any one of the above (1) to (4), the second fluororesin may contain an ethylene-tetrafluoroethylene copolymer (ETFE). According to this, the heat resistance of the inner layer is improved, and the inner layer can further contribute to maintaining the excellent sealing properties of the heat-shrinkable tube in use under the high-temperature environment of about 200°C. Further, when the object to be covered is an ETFE wire, the inner layer can have excellent adhesiveness to the insulating layer (i.e., ETFE) of the ETFE wire.

(6) In the above (5), the second fluororesin may further contain polyvinylidene fluoride, and the inner layer may contain 5 mass% to 40 mass% of the polyvinylidene fluoride. According to this, it becomes easier to adjust the shear viscosity of the inner layer at 215°C and the shear rate of 10/s, as well as the shear viscosity at 200°C and the shear rate of 1/s, to a more suitable range.

(7) In any one of the above (1) to (6), the heat-shrinkable tube may have a shrinkage ratio of 50% or more. According to this, the inner layer enters a gap of the wire to be covered when the heat-shrinkable tube is heated and shrunk, and the gap is easily filled, and the sealing properties during heat shrinkage and under the high-temperature environment and the sealing properties for a portion having a large step are further improved.

(8) A heat-shrinkable tube member of the present disclosure is a heat-shrinkable tube member having a cylindrical shape. The heat-shrinkable tube member contains a fluororesin as a main component, the heat-shrinkable tube member has a shear viscosity of 300 Pa·s to 10,000 Pa·s at 215°C and a shear rate of 10/s, and the heat-shrinkable tube member has a shear viscosity of 3,000 Pa·s to 70,000 Pa·s at 200°C and a shear rate of 1/s.

The heat-shrinkable tube member of the present disclosure has the same configuration as the inner layer of the heat-shrinkable tube of the above (1). The heat-shrinkable tube of the above (1) can be obtained by fitting the heat-shrinkable tube member (hereinafter also referred to as "inner layer member") of the present disclosure inside a heat-shrinkable tube member (hereinafter also referred to as "outer layer member") having the same configuration as the outer layer of the heat-shrinkable tube of the above (1).

After the connection portion of the insulated wires is covered with the inner layer member, the outer periphery of the inner layer member is further covered with the outer layer member, and then the outer layer member is thermally shrunk, whereby the connection portion of the insulated wires can be sealed.

The wire may be covered in a state where the inner layer member is fitted inside the outer layer member. When the plurality of wires are sealed, the sealing properties are further improved by covering each wire with the inner layer member, covering the outer periphery of the plurality of wires covered with the inner layer member with the outer layer member in a state where the plurality of wires are collected, and shrinking the outer layer member.

The heat-shrinkable tube including the heat-shrinkable tube member of the present disclosure as an inner layer has excellent sealing properties during heat shrinkage, and can maintain excellent sealing properties even in use under the high-temperature environment. The reason for this is inferred to be as follows.

The heat-shrinkable tube member of the present disclosure contains a fluororesin as a main component. Fluororesin has a melting point of 100°C or higher and has a strong fluorine bond, and thus has high heat resistance. Thus, the inner layer consisting of the heat-shrinkable tube member of the present disclosure can contribute to maintaining the excellent sealing properties of the heat-shrinkable tube in use under the high-temperature environment of about 200°C. Furthermore, since the fluororesin has high chemical resistance, the heat-shrinkable tube including the heat-shrinkable tube member of the present disclosure as an inner layer can block the penetration of acid, alkali, and oil.

The shear viscosity of the heat-shrinkable tube member of the present disclosure at 215°C and a shear rate of 10/s is 300 Pa·s to 10,000 Pa·s. According to this, in the heat-shrinkable tube including the inner layer consisting of the heat-shrinkable tube member of the present disclosure, the fluidity of the inner layer during heat shrinkage is appropriate, gaps are hardly generated between the covering target and the heat-shrinkable tube, and can obtain good sealing properties.

The shear viscosity of the heat-shrinkable tube member of the present disclosure at 200°C and a shear rate of 1/s is 3,000 Pa·s to 70,000 Pa·s. According to this, the heat-shrinkable tube including the inner layer consisting of the heat-shrinkable tube member of the present disclosure has appropriate fluidity of the inner layer under the high-temperature environment, and can obtain good sealing properties.

(9) In the above (8), in a DSC curve of the heat-shrinkable tube member, one or more melting peaks may be present in a range of 120°C to 195°C. The DSC curve may be obtained by performing a measurement using a differential scanning calorimeter in a range of -50°C to 300°C at a heating rate of 10°C/min. When one or more melting peaks are present at 120°C or higher, the heat resistance of the heat-shrinkable tube member is further improved, and the sealing performance is improved. When one or more melting peaks are present at 195°C or less, the fluidity of the heat-shrinkable tube member is further improved, and the sealing performance is improved.

(10) In the above (8) or (9), the fluororesin may be an ethylene-tetrafluoroethylene copolymer. According to this, in the heat-shrinkable tube including the inner layer consisting of the heat-shrinkable tube member of the present disclosure, the heat resistance of the inner layer is improved. Thus, the inner layer can further contribute to maintaining the excellent sealing properties of the heat-shrinkable tube in use under the high-temperature environment of about 200°C. Further, when the object to be covered is an ETFE wire, the inner layer can have excellent adhesiveness to the insulating layer (i.e., ETFE) of the ETFE wire. The inner layer is less likely to deteriorate when the resin forming the outer layer is crosslinked by irradiation with ionizing radiation.

(11) In the above (10), the heat-shrinkable tube member may contain 5 mass% to 40 mass% of polyvinylidene fluoride. According to this, in the heat-shrinkable tube including the inner layer consisting of the heat-shrinkable tube member of the present disclosure, the sealing properties during heat shrinkage and under the high-temperature environment are more easily adjusted.

(12) A wire splice of the present disclosure includes a plurality of wires including conductors and insulating layers disposed on outer sides of the conductors, and a heat-shrunk product of the heat-shrinkable tube according to any one of the above (1) to (7) or a heat-shrunk product of the heat-shrinkable tube member according to any one of the above (8) to (11), each of the heat-shrunk products covering a portion where the conductors of the plurality of wires are connected together.

The wire splice of the present disclosure can have excellent durability and excellent electrical properties because the heat-shrinkable tube has excellent sealing properties during heat shrinkage of the heat-shrinkable tube and in use under the high-temperature environment.

(13) A wire harness of the present disclosure includes a plurality of wires including conductors and insulating layers disposed on outer sides of the conductors, and a heat-shrunk product of the heat-shrinkable tube according to any one of the above (1) to (7) or a heat-shrunk product of the heat-shrinkable tube member according to any one of the above (8) to (11), each of the heat-shrunk products covering the plurality of wires.

The wire harness of the present disclosure can have excellent durability and excellent electrical properties because the heat-shrinkable tube has excellent sealing properties during heat shrinkage of the heat-shrinkable tube and in use under the high-temperature environment.

BRIEF DESCRIPTION OF THE DRAWINGS

FIG. 1 is a perspective view showing an example of a heat-shrinkable tube according to a first embodiment.
FIG. 2 is a schematic cross-sectional view taken along line II-II of FIG. 1.
FIG. 3 is a schematic cross-sectional view taken along line III-III of FIG. 1.
FIG. 4 is a perspective view showing an example of a heat-shrinkable tube member according to a second embodiment.
FIG. 5 is a schematic cross-sectional view showing an example of a wire splice according to a third embodiment.
FIG. 6 is a schematic cross-sectional view showing an example of a wire harness according to a fourth embodiment.
FIG. 7 is a schematic cross-sectional view taken along line VII-VII of FIG. 6.

DETAILED DESCRIPTION

[Details of Embodiments of Present Disclosure]

Specific examples of the heat-shrinkable tube, the heat-shrinkable tube member, and the wire harness of the present disclosure will be described below with reference to the drawings. In the drawings of the present disclosure, the same reference numerals represent the same or equivalent portions. Further, dimensional relationships such as length, width, thickness, and depth are appropriately changed for clarification and simplification of the drawings, and do not necessarily represent actual dimensional relationships.

In the present specification, a notation in the form of "A to B" means A or more and B or less, and in a case where there is no description of a unit in A and a unit is described only in B, the unit of A and the unit of B are the same.

In the present specification, when a compound or the like is represented by a chemical formula, all conventionally known atomic ratios are included when the atomic ratio is not particularly limited, and the atomic ratio should not necessarily be limited to only a stoichiometric range.

Where the present disclosure recites one or more numerical values for each of a lower limit and an upper limit of a numerical range, any combination of any one numerical value recited at the lower limit with any one numerical value recited at the upper limit is also disclosed.

In the present disclosure, the terms "comprise," "contain," "have," "include," and variations thereof are open-ended terms. The open-ended term can include additional elements in addition to the essential elements, or it can exclude them. The phrase "consist of" is a closed term. However, even a configuration expressed by a closed term may include an additional element that is an impurity normally accompanying or is irrelevant to the target technology.

[First Embodiment: Heat-Shrinkable Tube]

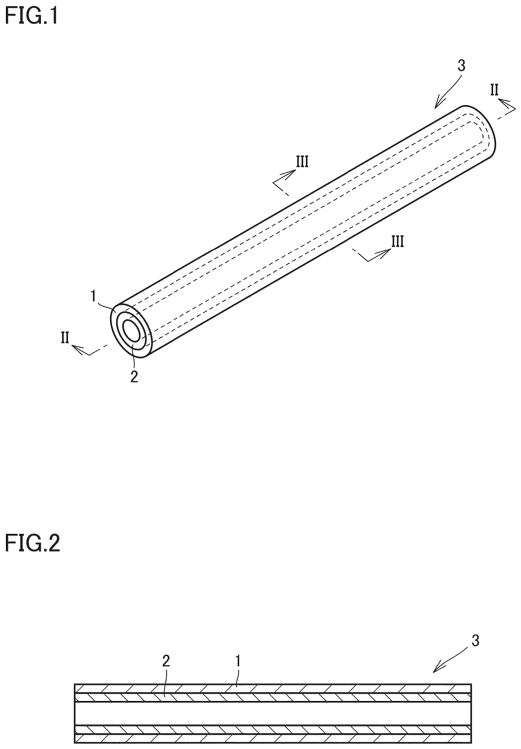

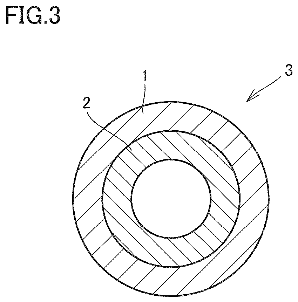

A heat-shrinkable tube according to an embodiment of the present disclosure (hereinafter also referred to as "first embodiment") will be described with reference to FIG. 1 to FIG. 3. A heat-shrinkable tube 3 of the first embodiment is the heat-shrinkable tube 3 including an outer layer 1 having a cylindrical shape and an inner layer 2 disposed on an inner peripheral surface of the outer layer 1. As shown in FIG. 1 to FIG. 3, the outer peripheral surface of the inner layer 2 is disposed in contact with the inner peripheral surface of the outer layer 1. The inner layer 2 may be disposed on the entire inner peripheral surface of the outer layer 1. As long as the effect of the present disclosure is not impaired, even when the inner layer 2 is not disposed on a part of the inner peripheral surface of the outer layer 1, it does not deviate from the range of the first embodiment.

The diameter of the heat-shrinkable tube and the thicknesses of the outer layer and the inner layer can be appropriately set according to the application and the like. The inner diameter of the heat-shrinkable tube may be 1.0 mm to 110 mm. The thickness of the outer layer may be 0.1 mm to 10 mm. The thickness of the inner layer may be designed to provide protection, waterproofing, oil proofing, and the like of the connection portion between the insulated wires covered with the heat-shrinkable tube. Thus, a preferable range of the thickness of the inner layer varies depending on the size and shape of the connection portion between the insulated wires. For example, the thickness of the inner layer may be 0.1 mm to 10 mm.

The heat-shrinkable tube has a shrinkage ratio of 50% or more, 50% to 80%, 60% to 80%, or 70% to 80%. In the present disclosure, the shrinkage ratio of the heat-shrinkable tube is an inner diameter shrinkage ratio defined by the following equation. Inner diameter shrinkage ratio (%) = {(inner diameter before shrinkage-inner diameter after complete shrinkage)/inner diameter before shrinkage} $\times$ 100

The thickness deviation rate of the heat-shrinkable tube may be 60% or more, 70% or more, or 80% or more. The thickness deviation rate of the heat-shrinkable tube is defined by the following equation.

Thickness deviation rate (%) = (minimum thickness/maximum thickness in cross-section of heat-shrinkable tube) 100

The length change rate of the heat-shrinkable tube may be -20% or more and +20% or less, -15% to and +15%, -10% to +10%, or -5% to +5%. The length change rate of the heat-shrinkable tube is defined by the following equation.

Length change rate (%) = {(length of heat-shrinkable tube after shrink-length of heat-shrinkable tube before shrink)/ length of heat-shrinkable tube before shrink} $\times$ 100

The end face inclination angle of the heat-shrinkable tube at the time of shrinkage may be 15° or less, 10° or less, 8° or less, or 5° or less. The end face inclination angle is a measure indicating the degree of deformation occurring in the end face in the longitudinal direction of the heat-shrinkable tube due to heat shrinkage. The end face inclination angle is measured by the following procedure. In a vertical cross-sectional view taken along the longitudinal direction from the distal end portion after heat shrinkage of the heat-shrinkable tube, the distance between a straight line parallel to the outer diameter passing through the uppermost point that protrudes the most from the distal end portion in the longitudinal direction and a straight line parallel to the outer diameter passing through the lowermost point that is recessed the most from the distal end portion in the longitudinal direction is defined as X mm. The end face inclination angle is an angle $\theta$ satisfying the following equation when the outer diameter of the heat-shrinkable tube is D mm. $\tan\theta = X/D$

The inner diameter, the shrinkage ratio, the thickness deviation rate, the length change rate, and the end face inclination angle at the time of shrinkage of the heat-shrinkable tube can be adjusted by controlling the storage modulus of the heat-shrinkable tube, the heating temperature at the time of expansion, the heating method at the time of expansion, the expansion conditions such as the pressure difference between the inside and the outer side of the tube, and the surface treatment of the expansion die.

<Outer Layer>

In the heat-shrinkable tube of the first embodiment, the outer layer includes a first fluororesin. In the heat-shrinkable tube of the first embodiment, the outer layer may contain a mixture consisting of fluoro-rubber and the first fluororesin as a main component. In the present disclosure, the "main component of the outer layer" means a component having the largest content ratio among the components of the outer layer, and means a component contained at 60 mass% or more based on the total weight of the outer layer.

The content ratio of the mixture consisting of the fluoro-rubber and the first fluororesin in the outer layer may be 60 mass% to 100 mass%, 60 mass% or more and less than 100 mass%, 70 mass% to 95 mass%, or 80 mass% to 90 mass%. When the content ratio of the mixture of the outer layer is 60 mass% or more, the heat resistance of the outer layer is further improved. When the content ratio of the mixture of the outer layer is less than 100 mass%, the outer layer can contain other components, colorants, and the like for improving the heat resistance and the heat shrinkability.

The mass ratio of the fluoro-rubber to the first fluororesin in the mixture consisting of the fluoro-rubber and the first fluororesin may be fluoro-rubber: first fluororesin = 40:60 to 90:10, 50:50 to 60:40, or 60:40 to 70:30. When the mass ratio of the fluoro-rubber to the first fluororesin is fluoro-rubber: first fluororesin = 40:60 to 90:10, the heat resistance, heat shrinkability, and moldability of the outer layer and the adhesiveness to the inner layer are improved in a well-balanced manner, and the sealing properties of the heat-shrinkable tube are further improved.

The content ratio of the fluoro-rubber of the outer layer and the content ratio of the first fluororesin of the outer layer are measured by differential scanning calorimetry (DSC), infrared absorption spectroscopy (IR), and an F-NMR method.

The fluoro-rubber is composed of a combination of at least two or more monomers selected from the group consisting of VDF, HFP, TFE, ethylene, perfluoromethyl vinyl ether (PMVE), and propylene. Among them, the fluoro-rubber may be a VDF-HFP-TFE copolymer. When the inner layer contains ETFE, TFE of the VDF-HFP-TFE copolymer adheres to ETFE of the inner layer. Thus, the adhesive force between the outer layer consisting of the mixture containing the VDF-HFP-TFE copolymer and the inner layer is improved, and the sealing properties are improved.

The first fluororesin may contain at least one selected from the group consisting of polyvinylidene fluoride (PVDF), ETFE, and a tetrafluoroethylene-hexafluoropropylene-vinylidene fluoride copolymer (THV). Among them, the first fluororesin may be PVDF. Fluoro-rubber has high heat resistance, and among them, VDF-HFP-TFE copolymer is suitable for the outer layer because it adheres to ETFE when the inner layer contains ETFE. However, when the outer layer is formed only of fluoro-rubber, the moldability is poor, and the outer layer shrinks even at room temperature because of no melting point, and thus a heat-shrinkable tube cannot be formed. By mixing the fluoro-rubber and the PVDF, the heat resistance and the shrinkage force of the heat-shrinkable tube are improved in a well-balanced manner.

The outer layer may contain other components such as additives as long as the effects of the present disclosure are not impaired. Examples of the other components include a crosslinking aid, an antioxidant, a copper inhibitor, a lubricant, a colorant, a heat stabilizer, and an ultraviolet absorber.

The first fluororesin and the fluoro-rubber contained in the outer layer may be crosslinked by electron beam irradiation. According to this, the shape memory property of the heat-shrinkable tube improves.

The content ratio of fluorine in the outer layer may be in an amount of 65 mass% to 71 mass%, or 65 mass% to 69 mass%. When the content ratio of fluorine in the outer layer is 65 mass% or more, the heat resistance is further improved. When the content ratio of fluorine in the outer layer is 71 mass% or less, the shrinkage temperature of the heat-shrinkable tube is appropriate, and deterioration of the object (for example, an ETFE wire) to be covered is reduced. When the content ratio of fluorine in the outer layer is 65 mass% to 71 mass%, the processability of the heat-shrinkable tube is improved. The content ratio of fluorine in the outer layer is measured by gas ion chromatography analysis.

The storage modulus of the outer layer at 215°C may be 0.5 MPa to 5.0 MPa, 0.8 MPa to 4 MPa, or 1 MPa to 3 MPa. In the present disclosure, the "storage modulus" is measured according to the method for testing dynamic mechanical properties described in JIS-K7244-4 (1999). The conditions for measuring the storage modulus of the outer layer at 215°C are as follows: a temperature of 215°C; a tensile mode of 30 mm between chucks; a strain of 0.08%; and a frequency of 10 Hz. As the viscoelasticity measuring apparatus, for example, "DVA-220" manufactured by IT Keisoku Seigyo Co., Ltd. can be used.

The storage modulus of the outer layer at 215°C is measured after the electron beam irradiation is performed to the outer layer during the process of manufacturing the heat-shrinkable tube.

<Inner Layer>

In the heat-shrinkable tube of the first embodiment, the inner layer contains a second fluororesin as a main component. In the present disclosure, the "main component of the inner layer" means a component having the largest content ratio among the components of the inner layer, and means a component contained at 60 mass% or more with respect to the total mass of the inner layer.

The content ratio of the second fluororesin of the inner layer may be in an amount of 60 mass% to 100 mass%, 70 mass% to 95 mass%, or 80 mass% to 90 mass%. When the content ratio of the second fluororesin in the inner layer is 60 mass% or more, the heat resistance of the inner layer is further improved. When the content ratio of the second fluororesin of the inner layer is less than 100 mass%, the inner layer can contain other components for improving the heat resistance and the heat shrinkability.

The content ratio of the second fluororesin of the inner layer is measured by DSC, IR, and F-NMR.

The second fluororesin may contain at least one selected from the group consisting of an ethylene-tetrafluoroethylene copolymer (ETFE), an ethylene-tetrafluoroethylene-hexafluoropropylene copolymer (EFEP), an acid-modified EFEP, polyvinylidene fluoride (PVDF), and a tetrafluoroethylene-hexafluoropropylene-vinylidene fluoride copolymer (THV).

The second fluororesin may contain an ethylene-tetrafluoroethylene copolymer. The second fluororesin may contain an ethylene-tetrafluoroethylene copolymer and polyvinylidene fluoride. The second fluororesin may consist of an ethylene-tetrafluoroethylene copolymer and polyvinylidene fluoride. In these cases, the inner layer may contain 5 mass% to 40 mass% of polyvinylidene fluoride.

The content ratio of each of the ethylene-tetrafluoroethylene copolymer and the polyvinylidene fluoride in the inner layer is measured by DSC and IR.

The inner layer may contain one or both of vinylidene fluoride-based fluoro-rubber (FKM) and ethylene-vinyl acetate copolymer (EVA).

The inner layer may contain an inorganic filler in addition to the second fluororesin. As the inorganic filler, silica, hydrotalcite, clay, or the like may be used. In the inner layer, 0.1 parts by mass to 20 parts by mass of the inorganic filler may be blended with respect to 100 parts by mass of the total of the second fluororesin and the fluoro-rubber. This makes it easy to adjust the shear viscosity of the inner layer at 215°C and a shear rate of 10/s and the shear viscosity of the inner layer at 200°C and a shear rate of 1/s to more suitable ranges.

The second fluororesin contained in the inner layer may be crosslinked in order to adjust the shear viscosity.

The inner layer may contain other components such as additives as long as the effects of the present disclosure are not impaired. Examples of the other components include an antioxidant, a copper inhibitor, a deterioration inhibitor, a viscosity improver, a flame retardant, a lubricant, a colorant, a heat stabilizer, an ultraviolet absorber, and a pressure-sensitive adhesive.

As the antioxidant, one or both of dibutylhydroxytoluene (BTH) and tris(2,4-di-tert-butylphenyl)phosphite may be used. In the inner layer, 1 part by mass to 10 parts by mass of an antioxidant may be blended with respect to 100 parts by mass of the second fluororesin. This makes it easy to adjust the shear viscosity of the inner layer at 215°C and a shear rate of 10/s and the shear viscosity of the inner layer at 200°C and a shear rate of 1/s to more suitable ranges.

The shear viscosity of the inner layer at 215°C and a shear rate of 10/s is 300 Pa·s to 10,000 Pa·s, and it may also be 1,000 Pa·s to 8,000 Pa·s, or may be 2,000 Pa·s to 5,000 Pa·s.

The shear viscosity of the inner layer at 200°C and a shear rate of 1/s is 3,000 Pa·s to 70,000 Pa·s, and it may also be 10,000 Pa·s to 60,000 Pa·s, or may be 15,000 Pa·s to 55,000 Pa·s.

The shear viscosity of the inner layer can be adjusted by selecting the raw material of the inner layer or adjusting the degree of crosslinking of the inner layer by electron beam irradiation.

In the present disclosure, the shear viscosity of the inner layer is measured at a predetermined temperature and a predetermined shear rate using a rotational rheometer ("MCR302" manufactured by Anton Paar GmbH). In the process of manufacturing the heat-shrinkable tube, when electron beam irradiation is performed on the inner layer, when electron beam irradiation is performed on the outer layer after the outer layer and the inner layer are bonded to each other, or when electron beam irradiation is performed on the outer layer of the two layer tube, the shear viscosity of the inner layer is measured after electron beam irradiation is performed. The shear viscosity of the heat-shrinkable tube member of the second embodiment is also measured in the same manner.

In the DSC curve of the inner layer, one or more melting peaks are present in a range of 120°C to 195°C. When two melting peaks are present in the DSC curve, the peak temperature of one melting peak may be in a range of 120°C to 195°C, and the peak temperature of the other melting peak may be out of the range of 120°C to 195°C. Further, in a case where two melting peaks are present in the DSC curve, the peak temperature of the two melting peaks may be in a range of 120°C to 195°C. When three or more melting peaks are present in the DSC curve, the peak temperature of at least one melting peak may be in a range of 120°C to 195°C. When three or more melting peaks are present in the DSC curve, the peak temperatures of all the melting peaks may be in a range of 120°C to 195°C.

In the DSC curve of the inner layer, the peak temperature of the melting peak present in a range of 120°C to 195°C may be 130°C to 190°C, or 140°C to 190°C.

In the present disclosure, the DSC curve is obtained by measuring in the range of -50°C to 300°C at a heating rate of 10°C/min using a differential scanning calorimeter. The specific temperature program at the time of measurement is as follows. First, the temperature is kept at 0°C for 5 minutes. Next, the temperature is raised to 300°C at a heating rate of 10°C/min, and the temperature is kept at 300°C for 5 minutes. Next, the temperature is lowered to -50°C at a cooling rate of -10°C/min, and the temperature is kept at -50°C for 5 minutes. Next, the temperature is raised to 300°C at a heating rate of 10°C/min.

In the process of manufacturing the heat-shrinkable tube, when the electron beam irradiation is performed on the inner layer, when the electron beam irradiation is performed on the outer layer after the outer layer and the inner layer are adhered to each other, or when the electron beam irradiation is performed on the outer layer of the two layer tube, the inner layer melting point is measured after the electron beam irradiation is performed. The DSC curve of the heat-shrinkable tube member of the second embodiment is also measured in the same manner.

<Manufacturing Method of Heat-Shrinkable Tube>

The heat-shrinkable tube of the first embodiment can be manufactured by, for example, the following manufacturing method A or manufacturing method B.

<Manufacturing Method A>

The manufacturing method A can include, for example, the following steps (1A) to (4A).

  (1A) Step of preparing outer layer composition
  (2A) Step of preparing inner layer composition

(3A) Step of forming an outer layer member and an inner layer member by separately extruding the outer layer composition and the inner layer composition using a melt extruder (hereinafter also referred to as "step of forming an outer layer member and an inner layer member").

(4A) Step of combining the outer layer member and the inner layer member to obtain a heat-shrinkable tube (hereinafter also referred to as "step of obtaining a heat-shrinkable tube").

(1A) Step of Preparing Outer Layer Composition

The outer layer composition can be prepared by mixing the first fluororesin and optionally other components, for example, with a melt mixer. Examples of the other components include fluoro-rubber and additives. As the melt mixer, a known one, for example, an open roll, a Banbury mixer, a pressure kneader, a single-screw mixer, or a multi-screw mixer can be used. As the mixing conditions, by mixing at a temperature higher than the melting point of the first fluororesin by 20°C to 50°C, more uniform mixing can be performed, and good characteristics can be obtained.

(2A) Step of Adjusting Inner Layer Composition

The inner layer composition can be prepared by mixing the second fluororesin and optionally other components, for example, by a melt mixer. Examples of the other components include fluoro-rubber, EVA, and additives. The melt mixer similar to the one used for preparing the outer layer composition can be used. As the mixing conditions, by mixing at a temperature higher than the melting point of the second fluororesin by 20°C to 50°C, more uniform mixing can be performed, and good characteristics can be obtained.

(3A) Step of Forming Outer Layer Member and Inner Layer Member In the step of forming the outer layer member and the inner layer member, the outer layer composition and the inner layer composition are separately extruded to form a tubular outer layer member consisting of the outer layer composition and a tubular inner layer member consisting of the inner layer composition.

In the case where the outer layer composition and the inner layer composition are separately extruded, there are fewer constraints on the combination of resins contained in the outer layer composition and resins in the inner layer composition, making manufacturing easier.

The dimensions of the outer layer member and the inner layer member can be designed according to the application and the like.

This step includes a step of irradiating the outer layer member and the inner layer member with ionizing radiation. By crosslinking the outer layer member by irradiation with ionizing radiation, the shape retention and the heat resistance of the outer layer can be improved. The shear viscosity of the inner layer can be adjusted to a desired range by adjusting the composition of the inner layer member and the irradiation conditions of the ionizing radiation to the inner layer member.

Examples of the ionizing radiation to be irradiated include electron beams and gamma rays. Electron beams, which are relatively easy to prepare, are preferred. The electron beam irradiation condition for the outer layer member is, for example, the irradiation amount 70 kGy to 80 kGy. The electron beam irradiation condition for the inner layer member is, for example, the irradiation amount 50 kGy.

(4A) Step of Obtaining Heat-Shrinkable Tube

The heat-shrinkable tube is obtained by combining the outer layer member and the inner layer member. First, the outer layer member is heated to a temperature equal to or higher than the melting point, and in this state, the diameter of the outer layer member is increased to a predetermined inner diameter by a method such as introducing compressed air into the outer layer member, and then the outer layer member is cooled to fix the shape.

The process of increasing the diameter of the outer layer member is set so that the inner diameter of the outer layer member becomes about two to four times larger, for example.

The heat-shrinkable tube of the first embodiment is produced by fitting the inner layer member after the electron beam irradiation into the inner side of the outer layer member after the process of increasing the diameter.

<Manufacturing Method B>

The manufacturing method B can include, for example, the following steps (1B) to (4B). (1B) Step of preparing outer layer composition

(2B) Step of preparing inner layer composition

(3B) Step of forming a two layer molded article by extruding the outer layer composition and the inner layer composition using a melt extruder (hereinafter, also referred to as "step of forming a two layer molded article").

(4B) Step of increasing the diameter of a two layer molded article to obtain a heat-shrinkable tube (hereinafter also referred to as "step of obtaining a heat-shrinkable tube").

(1B) and (2B) are the same steps as (1A) and (2A) of manufacturing method A, respectively.

(3B) Step of Forming Two Layer Molded Article

The outer layer composition and the inner layer composition are extruded using a known co-extruder to form a tube-shaped two layer molded article in which the inner layer composition layer is laminated on the inner peripheral surface of the outer layer composition layer.

When the outer layer composition and the inner layer composition are coextruded, the cost and productivity are excellent, and a two layer molded article having a desired length can be easily produced.

The dimensions of the two layer molded article can be designed according to the application and the like.

This step includes a step of irradiating the outer peripheral surface of the two layer molded article with ionizing radiation. As a result, the outer layer composition layer and the inner layer composition layer are crosslinked to form a crosslinked body. By crosslinking the outer layer composition layer by irradiation with ionizing radiation, the shape retention and the heat resistance of the outer layer can be improved. The shear viscosity of the inner layer can be adjusted to a desired range by adjusting the composition of the inner layer composition layer and the irradiation conditions of the ionizing radiation to the inner layer composition layer.

Examples of the ionizing radiation to be irradiated include an electron beam and a gamma ray, and the electron beam is suitable because the equipment is relatively easy to prepare. The electron beam irradiation conditions are 70 kGy to 80 kGy.

(4B) Step of Obtaining Heat-Shrinkable Tube

The two layer molded article is heated to a temperature equal to or higher than the melting point of the outer layer composition layer, and the diameter of the two layer molded article is increased to a predetermined inner diameter by a method such as introducing compressed air into the two layer molded article, and then the shape is fixed by cooling. The process of increasing the diameter of the two layer molded article is set so that the inner diameter of the two layer molded article becomes about two to four times larger, for example. The heat-shrinkable tube of the first embodiment is obtained by increasing the diameter of the two layer molded article and fixing the shape thereof in this manner.

In the manufacturing method A and the manufacturing method B, when the main component of the outer layer is an ethylene-tetrafluoroethylene copolymer and the storage modulus at 215°C in the outer layer is 0.5 MPa to 5.0 MPa, the process of increasing the diameter is improved, the thickness deviation rate (thickness profile) can be improved, and the length change rate is easily controlled well. Further, the shrinkage in the longitudinal direction is likely to be uniformized, and the end face inclination at the time of shrinkage is likely to be reduced.

[Second Embodiment: Heat-Shrinkable Tube Member]

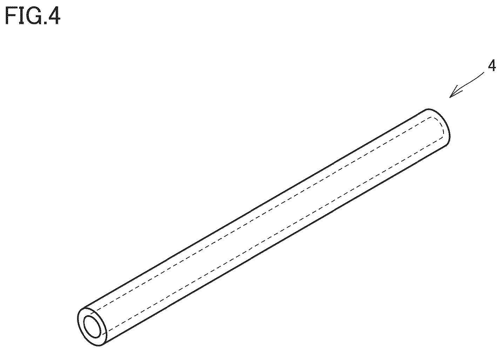

A heat-shrinkable tube member according to an embodiment of the present disclosure (hereinafter also referred to as "second embodiment") will be described with reference to FIG. 4. A heat-shrinkable tube member 4 of the second embodiment has a cylindrical shape.

The diameter and thickness of the heat-shrinkable tube member can be appropriately set according to the application and the like. For example, the inner diameter of the heat-shrinkable tube member may be 1.0 mm to 110 mm. The thickness of the heat-shrinkable tube member may be 0.1 mm to 10 mm.

The heat-shrinkable tube member contains fluororesin as a main component. In the present disclosure, the "main component of the heat-shrinkable tube member" means a component having the largest content ratio among the components of the heat-shrinkable tube member, and means a component contained in an amount of 60 mass% or more based on the total mass of the heat-shrinkable tube member.

The content ratio of the fluororesin in the heat-shrinkable tube member may be 60 mass% to 100 mass%, 70 mass% to 95 mass%, or 80 mass% to 90 mass%. When the content ratio of the fluororesin in the heat-shrinkable tube member is 60 mass% or more, the heat resistance of the heat-shrinkable tube member is further improved. When the content ratio of the fluororesin in the heat-shrinkable tube member is less than 100 mass%, the heat-shrinkable tube member may contain other components for improving the heat resistance and the heat shrinkability.

The content ratio of the fluororesin of the heat-shrinkable tube member is measured by DSC, IR, and F-NMR.

The fluororesin may contain at least one selected from the group consisting of ethylene-tetrafluoroethylene copolymer (ETFE), ethylene-tetrafluoroethylene-hexafluoropropylene copolymer (EFEP), acid-modified EFEP, polyvinylidene fluoride (PVDF), and tetrafluoroethylene-hexafluoropropylene-vinylidene fluoride copolymer (THV).

The fluororesin may contain an ethylene-tetrafluoroethylene copolymer. The fluororesin may contain an ethylene-tetrafluoroethylene copolymer and polyvinylidene fluoride. The fluororesin may consist of an ethylene-tetrafluoroethylene copolymer and polyvinylidene fluoride. In these cases, the heat-shrinkable tube member may contain 5 mass% to 40 mass% of polyvinylidene fluoride.

The content ratio of each of the ethylene-tetrafluoroethylene copolymer and the polyvinylidene fluoride of the heat-shrinkable tube member is measured by DSC and IR.

The heat-shrinkable tube member may contain one or both of vinylidene fluoride-based fluoro-rubber (FKM) and ethylene-vinyl acetate copolymer (EVA).

In the heat-shrinkable tube member, silica, hydrotalcite, clay, or the like may be used as an inorganic filler in addition to the fluororesin. In the heat-shrinkable tube member, 0.1 parts by mass to 20 parts by mass of an inorganic filler may be blended with respect to 100 parts by mass of the fluororesin. This makes it easy to adjust the shear viscosity of the heat-shrinkable tube member at 215°C and a shear rate of 10/s and the shear viscosity of the heat-shrinkable tube member at 200°C and a shear rate of 1/s to more suitable ranges.

The fluororesin contained in the heat-shrinkable tube member may be crosslinked in order to adjust the shear viscosity.

The heat-shrinkable tube member may contain, in addition to the fluororesin, other components such as additives as long as the effects of the present disclosure are not impaired. Examples of the other components include an antioxidant, a copper inhibitor, a deterioration inhibitor, a viscosity improver, a flame retardant, a lubricant, a colorant, a heat stabilizer, an ultraviolet absorber, and a pressure-sensitive adhesive.

As the antioxidant, one or both of dibutylhydroxytoluene (BTH) and tris(2,4-di-tert-butylphenyl)phosphite may be used. In the heat-shrinkable tube member, an antioxidant may be blended in an amount of 1 part by mass to 10 parts by mass with respect to 100 parts by mass of the fluororesin. This makes it easy to adjust the shear viscosity of the heat-shrinkable tube member at 215°C and a shear rate of 10/s and the shear viscosity of the heat-shrinkable tube member at 200°C and a shear rate of 1/s to more suitable ranges.

The shear viscosity of the heat-shrinkable tube member at 215°C and a shear rate of 10/s is 300 Pa·s to 10,000 Pa·s, and it may also be 1,000 Pa·s to 8,000 Pa·s, or may be 2,000 Pa·s to 5,000 Pa·s.

The shear viscosity of the heat-shrinkable tube member at 200°C and a shear rate of 1/s is 3,000 Pa·s to 70,000 Pa·s, and it may also be 10,000 Pa·s to 60,000 Pa·s, or may be 15,000 Pa·s to 55,000 Pa·s.

The shear viscosity of the inner layer can be adjusted by selecting the raw material of the heat-shrinkable tube member and adjusting the degree of crosslinking.

In a DSC curve of the heat-shrinkable tube member, one or more melting peaks are present in a range of 120°C to 195°C. When two melting peaks are present in the DSC curve, the peak temperature of one melting peak may be 120°C to 195°C, and the peak temperature of the other melting peak may be out of the range of 120°C to 195°C. Further, in a case where two melting peaks are present in the DSC curve, the peak temperature of the two melting peaks may be in a range of 120°C to 195°C. When three or more melting peaks are present in the DSC curve, the peak temperature of at least one melting peak may be in a range of 120°C to 195°C. When three or more melting peaks are present in the DSC curve, the peak temperatures of all the melting peaks may be in a range of 120°C to 195°C.

In the DSC curve of the heat-shrinkable tube member, the peak temperature of the melting peak present in a range of 120°C to 195°C may be 130°C to 190°C, or 140°C to 190°C.

<Manufacturing Method of Heat-Shrinkable tube Member>

The heat-shrinkable tube member of the second embodiment can be manufactured by melt-extruding a raw material into a tube shape using a known extruder. In order to adjust the shear viscosity of the heat-shrinkable tube member, the heat-shrinkable tube member may be irradiated with an electron beam. The electron beam irradiation condition is, for example, the irradiation amount 50 kGy.

[Third Embodiment: Wire Splice]

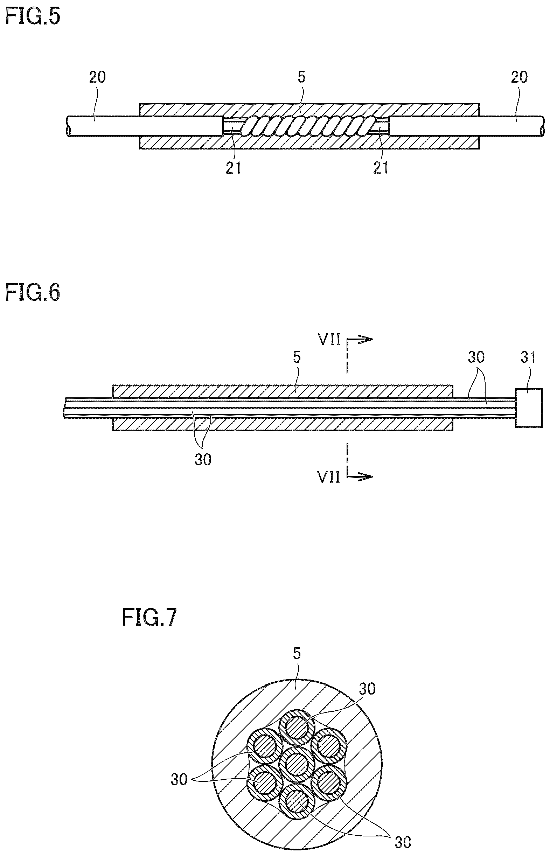

A wire splice according to an embodiment of the present disclosure (hereinafter also referred to as "third embodiment") will be described with reference to FIG. 5. The wire splice of the third embodiment is formed by twisting and connecting conductor lines 21 of a pair of wires 20, and covering the connection portion with a shrunk product 5 obtained by thermally shrinking the heat-shrinkable tube of the first embodiment. The wire 20 is an insulated wire or a cable having an insulating layer consisting of fluororesin or fluoro-rubber. As the wire 20, for example, a wire in which an insulating layer located at the outermost layer contains at least one of fluororesin and fluoro-rubber as a main component is used. The total content of the fluororesin and the fluoro-rubber in the insulating layer is, for example, 50 mass% to 95 mass%. In such a wire splice, the shrunk product 5 can contribute to protection, insulation, waterproofing, corrosion prevention, and the like of the connection portion.

[Fourth Embodiment: Wire Harness]

A wire harness according to an embodiment of the present disclosure (hereinafter also referred to as "fourth embodiment") will be described with reference to FIG. 6 and FIG. 7. The wire harness of the fourth embodiment is configured such that a plurality of wires 30 are bundled by the shrunk product 5 obtained by thermally shrinking the heat-shrinkable tube of the first embodiment, and a multi-pin connector 31 is provided at an end of the plurality of wires 30. The wire 30 is similar to the wire 20 of the wire splice. In the wire harness, the shrunk product 5 not only serves to bind the wires 30 but also serves to protect each wire 30.

There is a case where the wire splice of the third embodiment and the wire harness of the fourth embodiment cannot be strictly distinguished. There may be a case where the embodiment is the wire splice and is also the wire harness.

The heat-shrinkable tube may cover the connection portion of the plurality of insulated wires. The heat-shrinkable tube may cover the end of the insulated wire.

As the conductor and the insulating layer of the insulated wire, conventionally known ones can be used.

EXAMPLES

The present embodiment will be described more specifically with reference to examples. However, the present embodiment is not limited by these examples.

[Test Example 1]

<Production of Heat-Shrinkable Tube>

<<Production of Outer Layer Member>>

The raw materials shown in the "Outer Layer Raw Material" column in Table 1 to Table 3 were mixed at the ratios shown in the same column by a melt mixer to adjust an outer layer composition. The outer layer composition was extruded into a tube shape using an extruder to form an outer layer member. As the fluoro-rubber, a VDF-HFP-TFE copolymer was used. The mass ratio of VDF, HFP, and TFE in the fluoro-rubber was VDF: HFP: TFE = 55:35:10. The extrusion conditions were a die temperature of 280°C, a draw-down ratio of 10, and a linear velocity of 20 m/min. The melting point of the first fluororesin is as shown in Table 1 to Table 3. The mixing was performed at a temperature higher than the melting point of the first fluororesin by 20°C to 50°C.

Next, the outer layer member was irradiated with an electron beam. The amount of electron beam irradiation is as shown in Table 1 to Table 3.

<<Production of Inner Layer Member>>

The raw materials shown in the "Inner Layer Raw Material" column in Table 1 to Table 3 were mixed at the ratios shown in the same column by a melt mixer to adjust an inner layer composition. The ratios of the resin component and the rubber component are described with the total of the resin component and the rubber component as 100 mass%. The amount of silica is described as an amount (parts by mass) relative to 100 parts by mass of the total of the resin component and the rubber component. The inner layer composition was extruded into a tube shape using an extruder to form an inner layer member. The extrusion conditions were a die temperature of 285°C, a draw-down ratio of 10, and a linear velocity of 6 m/min. The melting points of the raw material resins are as shown in Table 1 to Table 3. The mixing was performed at a temperature higher than the melting point of the fluororesin by 20°C to 50°C.

Next, the inner layer member was irradiated with an electron beam. The amount of the electron beam irradiation is as shown in Table 1 to Table 3.

<<Combination of Outer Layer Member and Inner Layer Member>>

Next, the outer layer member was heated from 250°C to 280°C, and compressed air was introduced into the outer layer member to increase the diameter of the outer layer member. The diameter was increased so that the inner diameter became three times larger.

The inner layer member after the electron beam irradiation was fitted inside the outer layer member after the process of increasing the diameter to obtain a heat-shrinkable tube of each sample. In the heat-shrinkable tube, the thickness of the outer layer was 0.20 mm, and the thickness of the inner layer was 0.20 mm.

<Measurement>

The storage modulus at 215°C of the outer layer member after the process of increasing the diameter was measured by the method described in the first embodiment. The results are shown in Table 1 to Table 3.

The DSC curve of the inner layer after the electron beam irradiation was measured by the method described in the first embodiment. The DSC curve of each sample had a melting peak at the same temperature as the melting point of the inner layer resin in Table 1 to Table 3. For example, the DSC curve of the inner layer of Sample 5 had a melting peak at a peak temperature of 190°C and a melting peak at a peak temperature of 115°C.

In the inner layer after the electron beam irradiation, the shear viscosity at 215°C and a shear rate of 10/s and the shear viscosity at 200°C and a shear rate of 1/s were measured by the method described in the first embodiment. The results are shown in Table 1 to Table 3.

The heat-shrinkable tube of each sample was shrunk by heating at 215°C for 15 minutes. In all samples, the heat shrinkage ratio was 50% or more.

<Sealing Performance Evaluation>

The sealing performance of the heat-shrinkable tube of each sample was evaluated by an air leak test. A specific method of the air leak test is as follows. The heat-shrinkable tube of each sample was disposed so as to cover a portion where the conductor was revealed by peeling off the insulating layer of the insulated wire (ETFE wire), and the heat-shrinkable tube was shrunk by heating at 215°C for 15 minutes to obtain a test sample. After the heat-shrinkable tube as a test sample was heated at 200°C for 500 hours (Evaluation 1) or after the heat-shrinkable tube as a test sample was immersed in ATF oil at 150°C for 500 hours (Evaluation 2), one end of the insulated wire was sealed, a tube for introducing air was attached to the other end, and air leakage was evaluated. Air was introduced for 30 seconds under the pressure of the 200 kPa, and when no air leakage occurred, the test piece was judged to pass.

An air leak test was performed on the 10 test samples, and the sealing performance of the heat-shrinkable tube was evaluated according to the following criteria. In the case of A to D of the evaluation criteria, it is determined that the heat-shrinkable tube has excellent sealing properties during heat shrinkage and can maintain excellent sealing properties even in use under the high-temperature environment. In the case of E, it is determined that the heat-shrinkable tube has insufficient sealing properties during heat shrinkage and use in a high-temperature environment. The results are shown in Table 1 to Table 3.

<<Evaluation Criteria>>

A: The passing rate of the air leak test is 90% or more.
B: The passing rate of the air leak test is 80% or more and less than 90%.
C: The passing rate of the air leak test is 70% or more and less than 80%.
D: The passing rate of the air leak test is 60% or more and less than 70%.
E: The passing rate of the air leak test is less than 60%.

The heat-shrinkable tubes of Sample 4 to Sample 10 and Sample 14 to Sample 20 correspond to Examples. It was confirmed that the heat-shrinkable tubes of these samples had excellent sealing properties during heat shrinkage and could maintain excellent sealing properties even in use under the high-temperature environment in both Evaluation 1 and Evaluation 2.

The heat-shrinkable tubes of Sample 1 to Sample 3 and Sample 11 to Sample 13 correspond to comparative examples. It was confirmed that the heat-shrinkable tubes of these samples had insufficient sealing properties during heat shrinkage and use in the high-temperature environment in both Evaluation 1 and Evaluation 2.

It is inferred that in Sample 1 and Sample 3, the shear viscosity of the inner layer at a temperature of 215°C and a shear rate of 10/s was low, and the inner layer flowed out to the outer side of the heat-shrinkable tube during heat shrinkage, resulting in a decrease in sealing properties. It is inferred that in Sample 1 and Sample 2, the shear viscosity of the inner layer at a temperature of 200°C and a shear rate of 1/s was low, and the inner layer flowed out to the outer side of the heat-shrinkable tube in the high-temperature environment, resulting in a decrease in sealing properties.

It is inferred that in Sample 12 and Sample 13, the shear viscosity of the inner layer at a temperature of 215°C and a shear rate of 10/s was high, and the inner layer could not fill the gap between the insulated wire and the heat-shrinkable tube during heat shrinkage, resulting in a decrease in sealing properties. It is inferred that in Sample 11 and Sample 13, the shear viscosity of the inner layer at a temperature of 200°C and a shear rate of 1/s was high, and the inner layer could not fill the gap between the insulated wire and the heat-shrinkable tube in the high-temperature environment, resulting in a decrease in sealing properties.

[Table 1]

Table 1

| | | | Sample No. | 1 | 2 | 3 | 4 | 5 | 6 | 7 |
|---|---|---|---|---|---|---|---|---|---|---|
| Outer Layer | Outer Layer Raw Material | | First Fluororesin [mass%] | PVDF 40 | PVDF 40 | PVDF 40 | PVDF 40 | PVDF 40 | PVDF 40 | PVDF 40 |
| | | | Composition [mass%] | Fluoro-Rubber 60 | Fluoro-Rubber 60 | Fluoro-Rubber 60 | Fluoro-Rubber 60 | Fluoro-Rubber 60 | Fluoro-Rubber 60 | Fluoro-Rubber 60 |
| | Melting Point of First Fluororesin [°C] | | | 140 | 140 | 140 | 140 | 140 | 140 | 140 |
| | Storage Modulus at 215°C [MPa] | | | 1.0 | 1.0 | 1.0 | 1.0 | 1.0 | 1.0 | 1.0 |
| | Amount of Electron Beam Irradiation [kGy] | | | 80 | 80 | 80 | 80 | 80 | 80 | 80 |
| Inner Layer | Inner Layer Raw Material | | Composition [mass%] | THV 85 | THV 90 | THV 85 | PVDF 70 | ETFE 70 | ETFE 85 | ETFE 85 |
| | | | Composition [mass%] | EVA 15 | EVA 10 | EVA 15 | FKM 30 | PVDF 30 | PVDF 15 | FKM 15 |
| | | | Additive [part by mass] | - | Silica 0.2 | Silica 0.5 | - | - | - | - |
| | Melting Point of Inner Layer Resin | | Composition Melting Point [°C] | THV 115 | THV 115 | THV 115 | PVDF 115 | ETFE 190 | ETFE 190 | ETFE 190 |
| | | | Composition Melting Point [°C] | EVA 90 | EVA 90 | EVA 90 | - | PVDF 115 | PVDF 115 | - |
| | Amount of Electron Beam Irradiation [kGy] | | | 0 | 0 | 0 | 50 | 50 | 50 | 50 |
| | Temperature 215°C Shear Rate 10/s Shear Viscosity [Pa·s] | | | 200 | 300 | 200 | 300 | 1000 | 2000 | 3000 |
| | Temperature 200°C Shear Rate 1/s Shear Viscosity [Pa·s] | | | 500 | 2000 | 3000 | 3000 | 10000 | 15000 | 45000 |
| Evaluation 1 | Sealing Performance After Heating at 200°C for 500 Hours | | | E | E | E | C | B | A | A |
| Evaluation 2 | Sealing Performance after Immersion in ATF Oil (at 150°C for 500 Hours) | | | E | E | E | C | B | A | A |

[Table 2]

Table 2

| Sample No. | | | 8 | 9 | 10 | 11 | 12 | 13 |
|---|---|---|---|---|---|---|---|---|
| Outer Layer | Outer Layer Raw Material | First Fluororesin [mass%] | PVDF 40 | PVDF 40 | PVDF 40 | PVDF 40 | PVDF 40 | PVDF 40 |
| | | Composition [mass%] | Fluoro-Rubber 60 | Fluoro-Rubber 60 | Fluoro-Rubber 60 | Fluoro-Rubber 60 | Fluoro-Rubber 60 | Fluoro-Rubber 60 |
| | Melting Point of First Fluororesin [°C] | | 140 | 140 | 140 | 140 | 140 | 140 |
| | Storage Modulus at 215°C [MPa] | | 1.0 | 1.0 | 1.0 | 1.0 | 1.0 | 1.0 |
| | Amount of Electron Beam Irradiation [kGy] | | 80 | 80 | 80 | 80 | 80 | 80 |
| Inner Layer | Inner Layer Raw Material | Composition [mass%] | Acid-Modified EFEP 85 | ETFE 85 | ETFE 70 | THV 100 | THV 100 | THV 100 |
| | | Composition [mass%] | THV 15 | THV 15 | THV 30 | | | |
| | | Additive [part by mass] | - | - | - | - | - | - |
| | Melting Point of Inner Layer Resin | Composition Melting Point [°C] | Acid-Modified EFEP 170 | ETFE 190 | ETFE 190 | THV 115 | THV 115 | THV 115 |
| | | Composition Melting Point [°C] | THV 115 | THV 115 | THV 115 | | | |
| | Amount of Electron Beam Irradiation [kGy] | | 50 | 50 | 50 | 70 | 120 | 180 |
| | Temperature 215°C Shear Rate 10/s Shear Viscosity [Pa·s] | | 5000 | 8000 | 10000 | 10000 | 20000 | 30000 |
| | Temperature 200°C Shear Rate 1/s Shear Viscosity [Pa·s] | | 55000 | 60000 | 70000 | 85000 | 70000 | 100000 |
| Evaluation 1 | Sealing Performance After Heating at 200°C for 500 Hours | | A | B | C | E | E | E |
| Evaluation 2 | Sealing Performance After Immersion in ATF Oil (at 150°C for 500 Hours) | | A | B | C | E | E | E |

[Table 3]

Table 3

| Sample No. | | | 14 | 15 | 16 | 17 | 18 | 19 | 20 |
|---|---|---|---|---|---|---|---|---|---|
| Outer Layer | Outer Layer Raw Material | First Fluororesin [mass%] | PVDF 10 | PVDF 30 | ETFE 40 | ETFE 80 | ETFE 100 | THV 100 | PVDF 100 |
| | | Composition [mass%] | Fluoro-Rubber 90 | Fluoro-Rubber 70 | Fluoro-Rubber 60 | Fluoro-Rubber 20 | - | - | - |
| | Melting Point of First Fluororesin [°C] | | 140 | 140 | 225 | 225 | 225 | 115 | 160 |
| | Storage Modulus at 215°C [MPa] | | 0.2 | 0.5 | 2.0 | 5.0 | 7.0 | 0.1 | 1.0 |
| | Amount of Electron Beam Irradiation [kGy] | | 80 | 80 | 80 | 80 | 80 | 80 | 80 |
| Inner Layer | Inner Layer Raw Material | Composition [mass%] | ETFE 85 | ETFE 85 | ETFE 85 | ETFE 85 | ETFE 85 | ETFE 85 | ETFE 85 |
| | | Composition [mass%] | PVDF 15 | PVDF 15 | PVDF 15 | PVDF 15 | PVDF 15 | PVDF 15 | PVDF 15 |
| | | Additive [part by mass] | - | - | - | - | - | - | - |
| | Melting Point of Inner Layer Resin | Composition Melting Point [°C] | ETFE 170 | ETFE 170 | ETFE 170 | ETFE 170 | ETFE 170 | ETFE 170 | ETFE 170 |
| | | Composition Melting Point [°C] | PVDF 115 | PVDF 115 | PVDF 115 | PVDF 115 | PVDF 115 | PVDF 115 | PVDF 115 |
| | Amount of Electron Beam Irradiation [kGy] | | 50 | 50 | 50 | 50 | 50 | 50 | 50 |
| | Temperature 215°C Shear Rate 10/s Shear Viscosity [Pa·s] | | 2000 | 2000 | 2000 | 2000 | 2000 | 2000 | 2000 |
| | Temperature 200°C Shear Rate 1/s Shear Viscosity [Pa·s] | | 15000 | 15000 | 15000 | 15000 | 15000 | 15000 | 15000 |
| Evaluation 1 | Sealing Performance After Heating at 200°C for 500 Hours | | D | C | A | C | D | D | D |
| Evaluation 2 | Sealing Performance after Immersion in ATF Oil (at 150°C for 500 Hours) | | D | C | A | C | D | D | D |

[Test Example 2]

Heat-shrinkable tubes of the respective samples were produced in the same procedure as in test example 1 using the outer layer raw materials and the inner layer raw materials shown in Table 4. The melting points of the raw material resins are as shown in Table 4. As the fluoro-rubber, a VDF-HFP-TFE copolymer or a VDF-HFP copolymer was used. The mass ratio of VDF, HFP, and TFE in the fluoro-rubber is as described in the "Fluoro-Rubber Breakdown" column in Table 4. In the heat-shrinkable tube, the thickness of the outer layer was 0.20 mm, and the thickness of the inner layer was 0.20 mm.

<Measurement>

The storage modulus at 215°C of the outer layer member after the process of increasing the diameter was measured by the method described in the first embodiment. The results are shown in Table 4.

The DSC curve of the inner layer after the electron beam irradiation was measured by the method described in the first embodiment. The DSC curve of each sample had a melting peak at the same temperature as the melting point of the inner layer resin in Table 4. For example, the DSC curve of the inner layer of Sample 21 had a melting peak at a peak temperature of 190°C and a melting peak at a peak temperature of 115°C.

In the inner layer after the electron beam irradiation, the shear viscosity at 215°C and a shear rate of 10/s, and the shear viscosity at 200°C and a shear rate of 1/s were measured by the method described in the first embodiment. The results are shown in Table 4.

The heat-shrinkable tube of each sample was shrunk by heating at 215°C for 15 minutes. In all samples, the thermal shrinkage ratio was 50% or more.

<Sealing Performance Evaluation>

The sealing performance of the heat-shrinkable tube of each sample was evaluated in the same manner as in Evaluation 1 of Test Example 1. Further, the sealing performance of the heat-shrinkable tube of each sample was evaluated in the same manner as in Evaluation 2 of Test Example 1, except that jet engine fuel was used instead of the ATF oil in Evaluation 2 (Evaluation 3). The results are shown in Table 4.

[Table 4]

Table 4

| Sample No. | | | | 21 | 22 | 23 | 24 |
|---|---|---|---|---|---|---|---|
| Outer Layer | Outer Layer Raw Material | | First Fluororesin [mass%] | PVDF 40 | PVDF 40 | PVDF 40 | PVDF 40 |
| | | | Composition [mass%] | Fluoro-Rubber 60 | Fluoro-Rubber 60 | Fluoro-Rubber 60 | Fluoro-Rubber 60 |
| | | | Fluoro-Rubber Breakdown [mass ratio] | VDF 60 | VDF 55 | VDF 70 | VDF 60 |
| | | | | HFP 40 | HFP 35 | HFP 30 | HFP 35 |
| | | | | TFE 0 | TFE 10 | TFE 0 | TFE 5 |
| | Melting Point of First Fluororesin [°C] | | | 140 | 140 | 140 | 140 |
| | Storage Modulus at 215°C [MPa] | | | 1.0 | 1.0 | 1.0 | 1.0 |
| | Amount of Electron Beam Irradiation [kGy] | | | 80 | 80 | 80 | 80 |

(continued)

| Sample No. | | | | 21 | 22 | 23 | 24 |
|---|---|---|---|---|---|---|---|
| Inner Layer | Inner Layer Raw Material | Composition [mass%] | | ETFE 85 | ETFE 85 | ETFE 85 | ETFE 85 |
| | | Composition [mass%] | | PVDF 15 | PVDF 15 | PVDF 15 | PVDF 15 |
| | Melting Point of Inner Layer Resin | Composition Melting Point [°C] | | ETFE 190 | ETFE 190 | ETFE 190 | ETFE 190 |
| | | Composition Melting Point [°C] | | PVDF 115 | PVDF 115 | PVDF 115 | PVDF 115 |
| | Amount of Electron Beam Irradiation [kGy] | | | 50 | 50 | 50 | 50 |
| | Temperature 215°C Shear Rate 10/s Shear Viscosity [Pa·s] | | | 2000 | 2000 | 2000 | 2000 |
| | Temperature 200°C Shear Rate 1/s Shear Viscosity [Pa·s] | | | 15000 | 15000 | 15000 | 15000 |
| Evaluation 1 | Sealing Performance After Heating at 200°C for 500 Hours | | | C | B | C | B |
| Evaluation 3 | Sealing Performance After Immersion in Jet Engine Fuel (at 150°C for 500 Hours) | | | C | B | C | B |

The heat-shrinkable tubes of Sample 21 to Sample 24 correspond to Examples. It was confirmed that the heat-shrinkable tubes of these samples had excellent sealing properties during heat shrinkage, and could maintain excellent sealing properties even in use under the high-temperature environment in both Evaluation 1 and Evaluation 3. In particular, Sample 22 and Sample 24 using VDF-HFP-TFE copolymer as the fluoro-rubber of the outer layer had better sealing performance.

[Test Example 3]

Heat-shrinkable tubes of the respective samples were produced in the same procedure as in Test Example 1 using the outer layer raw materials and the inner layer raw materials shown in Table 5. The melting points of the raw material resins are as shown in Table 5. As the fluoro-rubber, a VDF-HFP-TFE copolymer was used. The mass ratio of VDF, HFP, and TFE in the fluoro-rubber was VDF: HFP: TFE = 55:35:10. The PVDF used had a melt flow rate of 93.4 g/10 min at 232°C and a load of 1.2 kg. In the heat-shrinkable tube, the thickness of the outer layer was 0.20 mm, and the thickness of the inner layer was 0.20 mm.

<Measurement>

The storage modulus at 215°C of the outer layer member after the process of increasing the diameter was measured by the method described in the first embodiment. The results are shown in Table 5.

The DSC curve of the inner layer after the electron beam irradiation was measured by the method described in the first embodiment. The DSC curve of each sample had a melting peak at the same temperature as the melting point of the inner layer resin in Table 5. For example, the DSC curve of the inner layer of Sample 26 had a melting peak at a peak temperature of 190°C and a melting peak at a peak temperature of 115°C.

In the inner layer after the electron beam irradiation, the shear viscosity at 215°C and a shear rate of 10/s, and the shear viscosity at 200°C and a shear rate of 1/s were measured by the method described in the first embodiment. The results are shown in Table 5.

The heat-shrinkable tube of each sample was shrunk by heating at 215°C for 15 minutes. In all samples, the heat shrinkage ratio was 50% or more.

<Sealing Performance Evaluation>

The sealing performance of the heat-shrinkable tube of each sample was evaluated in the same manner as in Evaluation 1 of Test Example 1. Further, the sealing performance of the heat-shrinkable tube of each sample was evaluated in the same manner as in Evaluation 2 of Test Example 1, except that a lubricating oil was used instead of the ATF oil in Evaluation 2 (Evaluation 4). The results are shown in Table 5.

[Table 5]

Table 5

| Sample No. | | | 25 | 26 | 27 | 28 | 29 |
|---|---|---|---|---|---|---|---|
| Outer Layer | Outer Layer Raw Material | First Fluororesin [mass%] | PVDF 40 | PVDF 40 | PVDF 40 | PVDF 40 | PVDF 40 |
| | | Composition [mass%] | Fluoro-Rubber 60 | Fluoro-Rubber 60 | Fluoro-Rubber 60 | Fluoro-Rubber 60 | Fluoro-Rubber 60 |
| | Melting Point of First Fluororesin [°C] | | 140 | 140 | 140 | 140 | 140 |
| | Storage Modulus at 215°C [MPa] | | 1.0 | 1.0 | 1.0 | 1.0 | 1.0 |
| | Amount of Electron Beam Irradiation [kGy] | | 70 | 70 | 70 | 70 | 70 |
| Inner Layer | Inner Layer Raw Material | Composition [mass%] | ETFE 100 | ETFE 95 | ETFE 90 | ETFE 70 | ETFE 60 |
| | | Composition [mass%] | | PVDF 5 | PVDF 10 | PVDF 30 | PVDF 40 |
| | Melting Point of Inner Layer Resin | Composition Melting Point [°C] | ETFE 190 | ETFE 190 | ETFE 190 | ETFE 190 | ETFE 190 |
| | | Composition Melting Point [°C] | | PVDF 115 | PVDF 115 | PVDF 115 | PVDF 115 |
| | Amount of Electron Beam Irradiation [kGy] | | 50 | 50 | 50 | 50 | 50 |
| | Temperature 215°C Shear Rate 10/s Shear Viscosity [Pa·s] | | 4500 | 3500 | 2300 | 1000 | 700 |
| | Temperature 200°C Shear Rate 1/s Shear Viscosity [Pa·s] | | 55000 | 45000 | 25000 | 10000 | 6000 |
| Evaluation 1 | Sealing Performance After Heating at 200°C for 500 Hours | | B | A | A | B | B |
| Evaluation 4 | Sealing Performance After Immersion in Lubricating Oil (at 150°C for 500 Hours) | | B | A | A | B | B |

The heat-shrinkable tubes of Sample 25 to Sample 29 correspond to Examples. It was confirmed that the heat-shrinkable tubes of these samples had excellent sealing properties during heat shrinkage and could maintain excellent sealing properties even in use under the high-temperature environment in both of Evaluation 1 and Evaluation 4.

[Test Example 4]

The raw materials shown in the "Outer Layer Raw Material" column in Table 6 were mixed in the ratios shown in the same column by a melt mixer to adjust an outer layer composition. The raw materials shown in the "Inner Layer Raw Material" column in Table 6 were mixed in the ratios shown in the same column by a melt mixer to adjust an inner layer composition. The outer layer composition and the inner layer composition were extruded using a co-extruder to form a tube-shaped two layer molded article in which the inner layer composition layer was laminated on the inner peripheral surface of the outer layer composition layer. The extrusion conditions were a die temperature of 280°C, a draw-down ratio of 10, and a linear velocity of 20 m/min.

The melting points of the raw material resins are as shown in Table 6. As the fluoro-rubber, a VDF-HFP-TFE copolymer was used. The mass ratio of VDF, HFP, and TFE in the fluoro-rubber was VDF: HFP: TFE = 55:35:10. As ETFE, three types of ETFE having different melting points were used.

The outer peripheral surface of the two layer molded article was irradiated with an electron beam. The amount of electron beam irradiation is as shown in Table 6.

The two layer molded article after the electron beam irradiation was subjected to the process of increasing the diameter by introducing compressed air into the inside in a state of being heated to 250°C to 280°C, thereby obtaining a heat-shrinkable tube of each sample. The process of increasing the diameter was performed so that the inner diameter was three times as large as the original diameter. In the heat-shrinkable tube, the thickness of the outer layer was 0.20 mm, and the thickness of the inner layer was 0.20 mm.

<Measurement>

In the heat-shrinkable tube after the process of increasing the diameter, the storage modulus of the outer layer at 215°C was measured by the method described in the first embodiment. The results are shown in Table 6.

The DSC curve of the inner layer after the electron beam irradiation was measured by the method described in the first embodiment. The DSC curve of each sample had a melting peak at the same temperature as the melting point of the inner layer resin in Table 6.

In the inner layer after the electron beam irradiation, the shear viscosity at 215°C and a shear rate of 10/s, and the shear viscosity at 200°C and a shear rate of 1/s were measured by the method described in the first embodiment. The results are shown in Table 6.

The heat-shrinkable tube of each sample was shrunk by heating at 215°C for 15 minutes. In all samples, the heat shrinkage ratio was 50% or more.

<Sealing Performance Evaluation>

The sealing performance of the heat-shrinkable tube of each sample was evaluated in the same manner as in Evaluation 1 of Test Example 1. Further, the sealing performance of the heat-shrinkable tube of each sample was evaluated in the same manner as in Evaluation 2 of Test Example 1, except that light oil was used instead of the ATF oil in Evaluation 2 (Evaluation 5). The results are shown in Table 6.

[Table 6]

Table 6

| Sample No. | | | 30 | 31 | 32 | 33 | 34 | 35 |
|---|---|---|---|---|---|---|---|---|
| Outer Layer | Outer Layer Raw Material | First Fluororesin [mass%] | PVDF 40 | PVDF 40 | PVDF 40 | PVDF 40 | PVDF 40 | PVDF 40 |
| | | Composition [mass%] | Fluoro-Rubber 60 | Fluoro-Rubber 60 | Fluoro-Rubber 60 | Fluoro-Rubber 60 | Fluoro-Rubber 60 | Fluoro-Rubber 60 |
| | Melting Point of First Fluororesin [°C] | | 140 | 140 | 140 | 140 | 140 | 140 |
| | Storage Modulus at 215°C [MPa] | | 1.0 | 1.0 | 1.0 | 1.0 | 1.0 | 1.0 |

(continued)

| Sample No. | | | 30 | 31 | 32 | 33 | 34 | 35 |
|---|---|---|---|---|---|---|---|---|
| Inner Layer | Inner Layer Raw Material | Composition [mass%] | THV | PVDF | Acid-Modified EFEP | ETFE | ETFE | ETFE |
| | Melting Point of Inner Layer Resin [°C] | | 115 | 120 | 170 | 190 | 195 | 200 |
| | Temperature 215°C Shear Rate 10/s Shear Viscosity [Pa·s] | | 10500 | 300 | 4000 | 5000 | 5500 | 6000 |
| | Temperature 200°C Shear Rate 1/s Shear Viscosity [Pa·s] | | 85500 | 3000 | 48000 | 60000 | 65000 | 70000 |
| Amount of Electron Beam Irradiation [kGy] | | | 80 | 80 | 80 | 80 | 80 | 80 |
| Evaluation 1 | Sealing Performance After Heating at 200°C for 500 Hours | | E | C | A | B | C | D |
| Evaluation 5 | Sealing Performance After Immersion in Light Oil (at 150°C for 500 Hours) | | E | C | A | B | C | D |

The heat-shrinkable tubes of Sample 31 to Sample 35 correspond to Examples. It was confirmed that the heat-shrinkable tubes of these samples had excellent sealing properties during heat shrinkage, and could maintain excellent sealing properties even in use under the high-temperature environment in both Evaluation 1 and Evaluation 5. Among them, the heat-shrinkable tubes of Sample 31 to Sample 34 in which the melting point of the inner layer was in the range of 120°C to 195°C had particularly excellent sealing properties. This is inferred that the balance between the heat resistance and the fluidity of the inner layer is particularly excellent, and the fluidity of the inner layer is good during heat shrinkage, which contributes to the improvement of the sealing properties of the heat-shrinkable tube.

The heat-shrinkable tube of Sample 30 corresponds to comparative example. It was confirmed that the heat-shrinkable tube of Sample 30 had insufficient sealing properties during heat shrinkage and use in the high-temperature environment in both Evaluation 1 and Evaluation 5.

Although the embodiments and examples of the present disclosure have been described above, it is originally intended that the configurations of the above-described embodiments and examples are appropriately combined or modified in various ways. The embodiments and examples disclosed herein are illustrative in all respects and should not be construed as limiting. The scope of the present invention is defined by the scope of the appended claims, rather than the embodiments and examples described above, and is intended to include any modifications within the scope and meaning equivalent to the scope of the appended claims.

REFERENCE SIGNS LIST

1 outer layer; 2 inner layer, 3 heat-shrinkable tube, 4 heat-shrinkable tube member; 5 shrunk product; 20, 30 wire; 21 conductor line; 31 multi-pin connector.

**Claims**

1.   A heat-shrinkable tube comprising:

an outer layer having a cylindrical shape; and
an inner layer disposed on an inner peripheral surface of the outer layer,
wherein the outer layer contains a first fluororesin,

the inner layer contains a second fluororesin as a main component,
the inner layer has a shear viscosity of 300 Pa·s to 10,000 Pa·s at 215°C and a shear rate of 10/s, and
the inner layer has a shear viscosity of 3,000 Pa·s to 70,000 Pa·s at 200°C and a shear rate of 1/s.

2. The heat-shrinkable tube according to claim 1, wherein the outer layer contains, as a main component, a mixture consisting of the first fluororesin and a fluoro-rubber, and
the outer layer has a storage modulus of 0.5 MPa to 5.0 MPa at 215°C.

3. The heat-shrinkable tube according to claim 2, wherein the fluoro-rubber is a VDF-HFP-TFE copolymer.

4. The heat-shrinkable tube according to any one of claims 1 to 3, wherein in a DSC curve of the inner layer, one or more melting peaks are present in a range of 120°C to 195°C, and
the DSC curve is obtained by performing a measurement using a differential scanning calorimeter in a range of -50°C to 300°C at a heating rate of 10°C/min.

5. The heat-shrinkable tube according to any one of claims 1 to 4, wherein the second fluororesin contains an ethylene-tetrafluoroethylene copolymer.

6. The heat-shrinkable tube according to claim 5, wherein the second fluororesin further contains polyvinylidene fluoride, and
the inner layer contains 5 mass% to 40 mass% of the polyvinylidene fluoride.

7. The heat-shrinkable tube according to any one of claims 1 to 6, wherein the heat-shrinkable tube has a shrinkage ratio of 50% or more.

8. A heat-shrinkable tube member having a cylindrical shape,

wherein the heat-shrinkable tube member contains a fluororesin as a main component,
the heat-shrinkable tube member has a shear viscosity of 300 Pa·s to 10,000 Pa·s at 215°C and a shear rate of 10/s, and
the heat-shrinkable tube member has a shear viscosity of 3,000 Pa·s to 70,000 Pa·s at 200°C and a shear rate of 1/s.

9. The heat-shrinkable tube member according to claim 8, wherein in a DSC curve of the heat-shrinkable tube member, one or more melting peaks are present in a range of 120°C to 195°C, and
the DSC curve is obtained by performing a measurement using a differential scanning calorimeter in a range of -50°C to 300°C at a heating rate of 10°C/min.

10. The heat-shrinkable tube member according to claim 8 or 9, wherein the fluororesin is an ethylene-tetrafluoroethylene copolymer.

11. The heat-shrinkable tube member according to claim 10, wherein the heat-shrinkable tube member contains 5 mass% to 40 mass% of polyvinylidene fluoride.

12. A wire splice comprising:

a plurality of wires including conductors and insulating layers disposed on outer sides of the conductors; and
a heat-shrunk product of the heat-shrinkable tube according to any one of claims 1 to 7 or a heat-shrunk product of the heat-shrinkable tube member according to any one of claims 8 to 11, each of the heat-shrunk products covering a portion where the conductors of the plurality of wires are connected together.

13. A wire harness comprising:

a plurality of wires including conductors and insulating layers disposed on outer sides of the conductors; and
a heat-shrunk product of the heat-shrinkable tube according to any one of claims 1 to 7 or a heat-shrunk product of the heat-shrinkable tube member according to any one of claims 8 to 11, each of the heat-shrunk products covering the plurality of wires.

FIG.1

FIG.2

FIG.3

FIG.4

4

FIG.5

FIG.6

FIG.7

Europäisches
Patentamt
European
Patent Office
Office européen
des brevets

# EUROPEAN SEARCH REPORT

**Application Number**

EP 25 21 3722

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/205562 A1 (CAMPBELL KATIE [US] ET AL) 30 June 2022 (2022-06-30) * claims 1,7,8 * | 1-13 | INV. B32B1/08 B32B27/30 B32B27/32 |
| X | US 2019/351639 A1 (YAMASAKI SATOSHI [JP] ET AL) 21 November 2019 (2019-11-21) * claim 1 * | 1,8 | ADD. B32B27/08 H01B3/44 |
| A | US 2008/248226 A1 (SIMON MARK W [US] ET AL) 9 October 2008 (2008-10-09) * claims 1,7 * | 1,5 | |

**TECHNICAL FIELDS SEARCHED (IPC)**

B32B
H01B

The present search report has been drawn up for all claims

| Place of search | Date of completion of the search | Examiner |
|---|---|---|
| The Hague | 3 March 2026 | Hillebrand, Gerhard |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
.................................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 25 21 3722

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2026

| Patent document cited in search report | Publication date | Patent family member(s) | | Publication date |
|---|---|---|---|---|
| US 2022205562 A1 | 30-06-2022 | US | 2022205562 A1 | 30-06-2022 |
| | | WO | 2022147431 A1 | 07-07-2022 |
| US 2019351639 A1 | 21-11-2019 | CN | 110198840 A | 03-09-2019 |
| | | EP | 3715115 A1 | 30-09-2020 |
| | | JP | 6630021 B2 | 15-01-2020 |
| | | JP | WO2019097820 A1 | 21-11-2019 |
| | | US | 2019351639 A1 | 21-11-2019 |
| | | WO | 2019097820 A1 | 23-05-2019 |
| US 2008248226 A1 | 09-10-2008 | CN | 101646871 A | 10-02-2010 |
| | | EP | 2126358 A2 | 02-12-2009 |
| | | JP | 2010520435 A | 10-06-2010 |
| | | US | 2008248226 A1 | 09-10-2008 |
| | | WO | 2008109863 A2 | 12-09-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024196654 A
- WO 2019097820 A
- WO 2021243036 A